# EUROPEAN PATENT APPLICATION

(11) **EP 2 562 435 A1**
(43) Date of publication of application: **27.02.2013**
(21) Application number: 11306063.6
(22) Date of filing: 25.08.2011
(51) Int. Cl.: F16C 19/16, F16C 25/08, F16C 27/06, F16C 33/61, F16C 33/60

(54) **Pre-stressed rolling bearing, notably for steering column**

(71) Applicant: Aktiebolaget SKF, 41 550 Göteborg (SE)
(72) Inventor: Lepine, Thomas, 37520 La Riche (FR); Montboeuf, Bruno, 37390 Cerelles (FR); Jansen, Daniel, 37000 Tours (FR); Bussit, Sylvain, 37380 Monnaie (FR)
(74) Representative: Casalonga, Axel

(57) **Abstract**

The pre-stressed rolling bearing comprises an inner ring 1, an outer ring 2 and a row of rolling elements 3 disposed between the rings, at least one of said rings comprising a housing 5, an annular wire 6 mounted in the housing to form a first raceway for the rolling elements, and a pre-stressing element 8 mounted in the housing. Said ring further comprises a stiffening cup 7 axially disposed between the pre-stressing element 8 and the rolling elements 3 and comprising a concave surface 7b forming a second raceway for the rolling elements.

## Description

The present invention relates to pre-stressed rolling bearings, having an inner ring and an outer ring with one or more rows of rolling elements, for example balls. The rolling bearings may be, for example, those used in a steering column for automotive vehicles, industrial electric motors or electromechanical actuators.

A steering column of an automotive vehicle generally comprises an inner tube or shaft having one of its end portions linked with a steering wheel actuated by the driver and the other of its end portions linked to mechanical elements, such as a toothed rack. The shaft of the steering column is mounted inside an outer tube via two rolling bearing assemblies. Each of said rolling bearing assemblies generally comprises a rolling bearing, for example a ball bearing, with an outer ring and an inner ring between which the rolling elements or the balls are mounted and maintained by a cage element.

European patent application EP-A1-1 956 254 (SKF) discloses a pre-stressed rolling bearing comprising an inner ring, an outer ring provided with a housing and two annular wires arranged in said housing to form raceways, a row of balls disposed between said wires and the inner ring, and a pre-stressing element made from elastic material and axially disposed between a first radial flange of the housing and one of the wires. A second radial flange of the housing is pressed against the other wire so as to exert an axial compression force on the pre-stressing element and to preload the rolling bearing both axially and radially.

The stiffness of such a pre-stressed rolling bearing may be insufficient in some cases.

One aim of the present invention is to overcome this drawback.

It is a particular object of the present invention to provide a pre-stressed rolling bearing which is simple to manufacture and to assembly, economic, while guaranteeing an improved stiffness and an enhanced dislocation resistance.

In one embodiment, the pre-stressed rolling bearing comprises an inner ring, an outer ring and a row of rolling elements disposed between the rings, at least one of said rings comprising a housing, an annular wire mounted in the housing to form a first raceway for the rolling elements, a pre-stressing element mounted in the housing and a stiffening cup axially disposed between the pre-stressing element and the rolling elements. The stiffening cup comprises a concave surface forming a second raceway for the rolling elements.

The stiffness of the rolling bearing is increased by using a cup or half-ring axially interposed between the rolling elements and the pre-stressing element.

Advantageously, the pre-stressing element is radially located between an outer axial portion of the housing and an inner edge of the stiffening cup. With such a radial disposition, if the elastic pre-stressing element is deformed by the associated wire, the phenomenon of creep or flow of the material of said element axially towards the balls is prevented.

In one embodiment, the stiffening cup comprises a toroidal portion having an internal concave surface forming the second raceway and an external surface in contact with the pre-stressing element. The pre-stressing element may recover entirely the external surface.

In one embodiment, the stiffening cup comprises an inner axial portion connected to the toroidal portion and extending towards a first lateral flange of the housing. Preferably, the inner axial portion is disposed into the bore of the pre-stressing element. Advantageously, the inner axial portion leaves an axial gap between its free end and the lateral flange. The stiffening cup may comprise an outer axial portion connected to the toroidal portion and extending towards the first lateral flange of the housing. Preferably, the outer axial portion axially bears against the pre-stressing element.

In one embodiment, the stiffening cup is massive and has in cross section a recess in the shape of an arc of a circle forming the second raceway. The pre-stressing element may recover entirely external surfaces of the stiffening cup.

The pre-stressing element may be overmoulded onto the stiffening cup.

Preferably, the housing comprises a first lateral flange in axial contact with a first surface of the pre-stressing element, the stiffening cup being mounted in contact with an opposite second surface of said pre-stressing element. The housing may comprise a second lateral flange in axial contact with the annular wire.

The rolling bearing may further comprise a cage for the rolling elements radially disposed between a free end of the second lateral flange and the inner ring.

In another aspect of the invention, a steering column for an automotive vehicle comprises an outer tube, an inner shaft and at least one pre-stressed rolling bearing as previously defined mounted radially between the tube and the shaft.

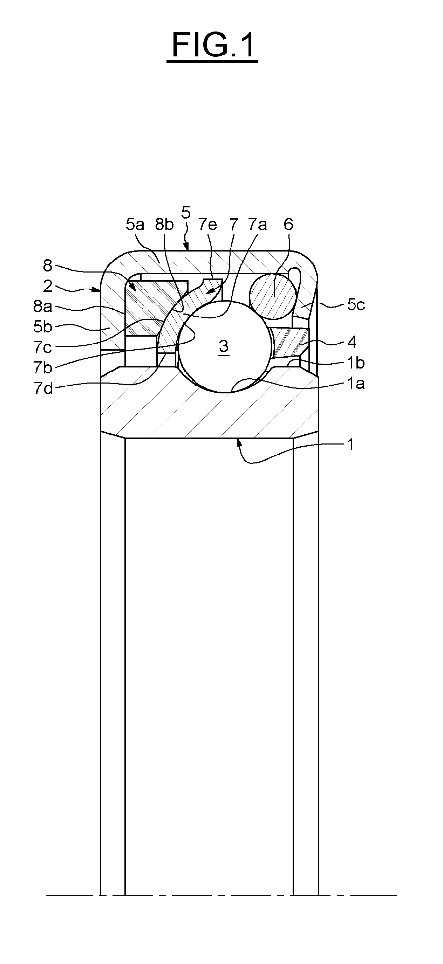

The present invention and its advantages will be better understood by studying the detailed description of specific embodiments given by way of non-limiting examples and illustrated by the appended drawings on which Figures 1 to 5 are axial half-sections of pre-stressed rolling bearings according to five examples of the invention.

As illustrated on Figure 1, which illustrates an embodiment of a pre-stressed rolling bearing according to the invention, a bearing comprises an inner ring 1, an outer ring 2, a row of rolling elements 3, that consist in the example of balls, and a cage 4 disposed radially between the rings to maintain a regular circumferential spacing between the rolling elements.

In this example, the inner ring 1 is designed to be mounted on a rotary member. It thus constitutes the rotatable ring of the bearing while the outer ring 2 constitutes the non-rotatable ring. The inner ring 1 is solid and has a toroidal groove 1a provided on its exterior cylindrical surface 1b and forming a raceway for the rolling elements 3 directed radially outwards. The radius of curvature of the groove 1a is slightly greater than the radius of the rolling elements 3. The inner ring 1 may be manufactured by machining or by pressing a steel blank which is then ground and optionally lapped at the raceway in order to give the ring 1 its geometric characteristics and its final surface finish. In this example, the groove 1a is offset axially with respect to a radial mid-plane of the inner ring 1.

The outer ring 2 comprises an outer housing 5, an annular wire 6, a stiffening cup 7 and a pre-stressing element 8 acting on said cup. The wire 6 and the stiffening cup 7 are two separate parts. The wire 6 is in the form of an annular ring. The wire 6 is formed of a rolled wire which ends are face-to-face when said wire is fitted into the housing 5. The wire 6 is disposed inside the housing 5 in direct contact therewith. The wire 6 forms a track or raceway for the rolling elements 3.

The annular stiffening cup 7 is made of a thin metal sheet, which has been stamped or rolled so as to define a toroidal track or raceway for the rolling elements 3. The stiffening cup 7 comprises a toroidal portion 7a having an internal concave surface 7b which forms the toroidal raceway for the rolling elements 3 and an external convex surface 7c in contact with the pre-stressing element 8. The small-diameter or inner edge 7d of the toroidal portion 7a remains distant from the cylindrical surface 1b of the inner ring 1. The large-diameter or outer edge 7e of the toroidal portion remains distant from the housing 5. The rolling elements 3 are positioned between the raceways of the outer ring 2 formed by the wire 6 and the stiffing cup 7, and the groove 1a of the inner ring 1.

The housing 5 is advantageously made of stamped metal sheet. The housing 5 is annular and comprises an outer axial portion 5a and two radial lateral flanges 5b and 5c, each flange extending radially inwards one end of the outer axial portion 5a. The wire 6 is arranged in radial contact with the bore of the outer axial portion 5a. The outer edge 7e of the stiffening cup remains radially distant from said axial portion 5a. The lateral flange 5c has a radial dimension smaller than the dimension of the lateral flange 5b and is also thinner to be slightly curved towards the rolling elements 3 so as to contact the wire 6 and to axially preload the rolling bearing. The cage 4 is disposed radially between the free end of the radial flange 5c and the cylindrical surface 1b of the inner ring 1.

The pre-stressing element 8 is annular and disposed axially between the lateral flange 5b of the housing and the stiffening cup 7. The pre-stressing element 8 is entirely located radially between the inner and outer edges 7d, 7e of the stiffening cup. The pre-stressing element 8 remains at a distance from the outer axial portion 5a of the housing and from the rolling elements 3. A radial surface 8a of the pre-stressing element 8 is in axial contact with an internal face of the lateral flange 5b of the housing, and an opposite concave surface 8b is in axial contact with the external convex surface 7c of the stiffening cup of complementary shape. The stiffening cup 7 recovers the concave surface 8b. The external convex surface 7c forms an abutment surface of the cup against the pre-stressing element 8. The stiffening cup 7 is in axial contact against the rolling elements 3 on one side and in axial contact with the pre-stressing element 8 on the other side. The pre-stressing element 8 is made from elastic material, for example an elastomer such as nitrile rubber or polyurethane. The pre-stressing element 8 may be obtained by moulding. In the illustrated embodiment, the pre-stressing element 8 has a toroidal form.

As previously mentioned, the lateral flange 5c of the housing is curved inwards so as to contact the wire 6. The flange 5c presses the wire 6 so as to exert, via the rolling elements 3 and the stiffening cup 7, an axial compression force on the pre-stressing element 8 and to preload the rolling bearing both axially and radially.

The stiffening cup 7 forms a means for distributing the applied preload on the pre-stressing element 8. The preload is transmitted to the pre-stressing element 8 without concentrations of excessive stresses. With regard to a conventional preload rolling bearing in which the raceway in direct contact with the pre-stressing element is formed of a rolled wire, the bearing surface of the cup coming into axial contact with the pre-stressing element 8 is increased in the rolling bearing according to an example of the invention.

In return of the axial compression force exerted on the pre-stressing element 8, said element exerts a permanent axial force on the associated stiffening cup 7. The pre-stressing element 8 tends, via the stiffening cup, to push and preload the row of rolling elements 3 against the wire 6, and also against the groove 1a of the inner ring 1. The load applied therefore pre-stresses the rolling elements 3 against the groove 1a and the wire 6.

With the radial disposition of the pre-stressing element 8 which is entirely located radially between the inner and outer edges 7d, 7e of the stiffening cup 7, the phenomenon of creep or flow in axial direction of the material of said pre-stressing element towards the rolling elements 3 is prevented. Besides, the stiffness of the rolling bearing is also increased by using the cup 7 in direct contact with the pre-stressing element 8 and the rolling elements 3. The stiffness of the rolling bearing is increased both axially and radially. Moreover, the dislocation resistance of the rolling bearing is also enhanced.

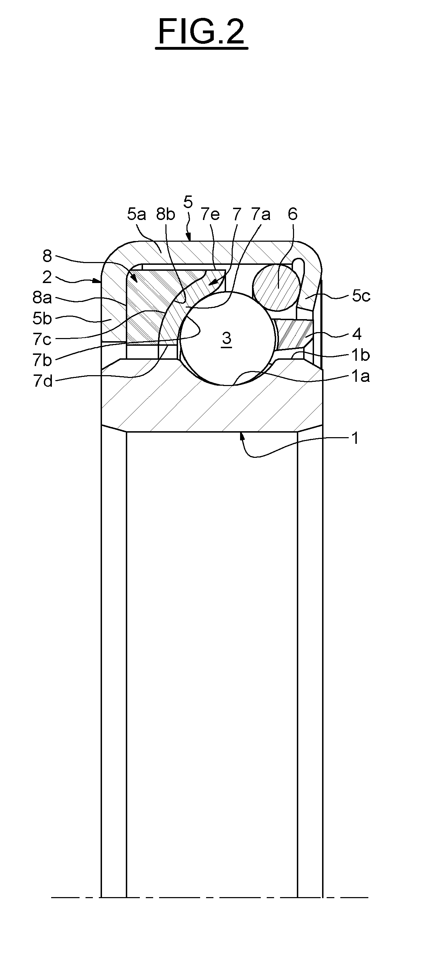

The embodiment shown on Figure 2, in which identical parts are give identical references, differs from the first embodiment in that the concave surface 8b of the pre-stressing element recovers entirely the convex surface 7c of the toroidal portion of the stiffening cup 7. The pre-stressing element 8 extends radially between the inner and outer edges 7d, 7e of the stiffening cup 7.

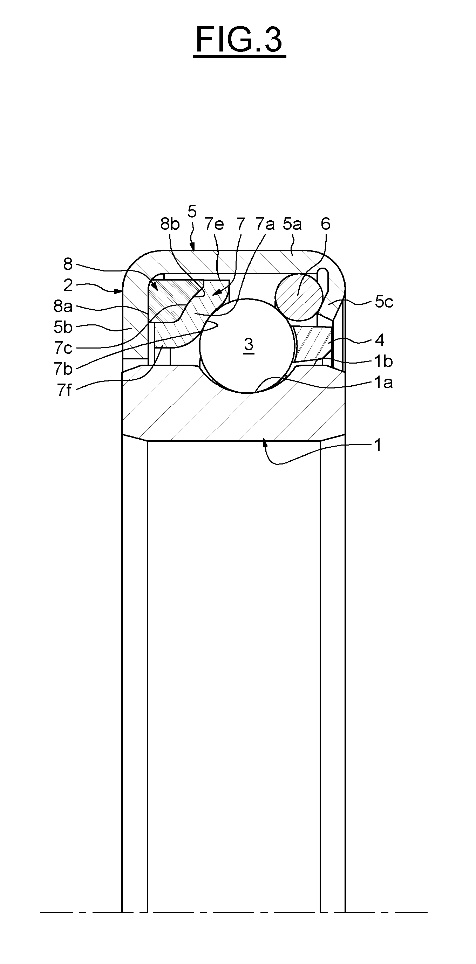

The embodiment shown on Figure 3, in which identical parts are given identical references, differs from the previous embodiment in that the length of the toroidal portion 7a of the cup is reduced. In this embodiment, the stiffening cup 7 comprises an annular inner axial portion 7f extending from the inner edge of said toroidal portion towards the lateral flange 5b of the housing. The inner axial portion 7f extends axially on the opposite side of the rolling elements 3. The axial portion 7f extends axially towards the lateral flange 5b of the housing and leaves an axial gap between its free end and the internal face of the flange 5b. The inner axial portion 7f is disposed in contact with the bore of the pre-stressing element 8. In this embodiment, the inner edge of the cup is formed by the bore of the inner axial portion 7f.

The axial portion 7f of the stiffening cup prevents a radial creep of the pre-stressing element 8. Otherwise, in case of external axial loads applied to the outer ring 2, the pre-stressing element 8 is axially compressed until the free end of the inner axial portion 7f of the stiffening cup abuts axially against the lateral flange 5b of the housing. During the deformation of the pre-stressing element 8, the axial loads are absorbed. Then, when the axial contact between the axial portion 7f and the internal face of the lateral flange 5b occurs, the axial stiffness of the rolling bearing is increased.

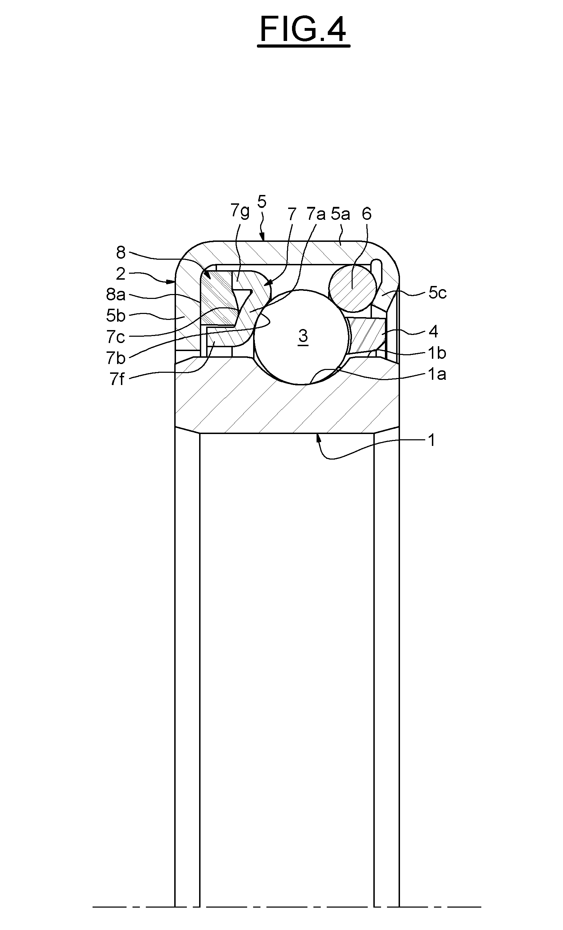

The embodiment shown on Figure 4, in which identical parts are given identical references, differs from the previous embodiment in that the stiffening cup 7 further comprises an annular outer axial portion 7g extending axially from an outer edge of the toroidal portion 7a towards the lateral flange 5b of the housing. The outer axial portion 7g remains at a distance away from the housing 5. The pre-stressing element 8 is entirely located radially between the inner axial portion 7f and the outer surface of the outer axial portion 7g of the cup. The pre-stressing element 8 is in axial contact with the free end of the outer axial portion 7g and the convex surface 7c of the cup.

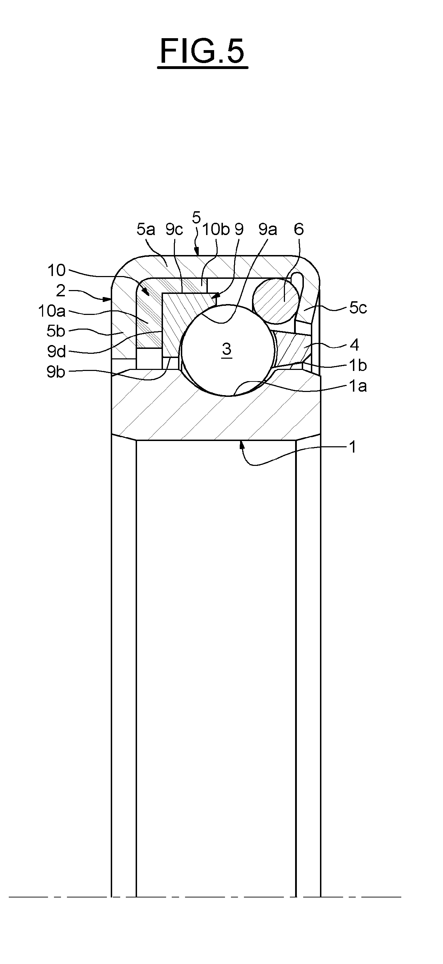

In the embodiment shown on Figure 5, in which identical parts are given identical references, the rolling bearing comprises a stiffening cup 9 in form a massive half-ring. A "massive ring" is to be understood as a ring obtained by machining with removal of material (by turning, grinding) from steel tube stock, bar stock, rough forgings and/or rolled blanks. The cup 9 has in cross section a concave recess or surface 9a in the shape of an arc of a circle having a radius substantially equal to the radius of the rolling elements 3. The concave surface 9a of the annular cup forms a toroidal raceway for the rolling elements 3. An inner bore or edge 9b of the stiffening cup 9 remains radially distant from the inner ring 1. An outer axial surface 9c of said cup remains radially distant from the housing.

In this embodiment, the rolling bearing comprises a pre-stressing element 10 having a L-shaped section. The pre-stressing element 10 is provided with a radial portion 10a in axial contact with the internal face of a lateral flange 5b of the housing and a radial end surface 9d of the stiffening cup 9, and with an axial portion 10b extending a large-diameter edge of the radial portion 10a and radially disposed into contact with the outer axial surface 9c of the cup and the outer axial portion 5a of the housing. The pre-stressing element 10 is made from elastic material, for example an elastomer such as nitrile rubber or polyurethane. The pre-stressing element 10 is entirely located radially between the outer axial portion 5a of the housing and the inner edge 9b of the stiffening cup 9.

In the disclosed embodiments, the outer ring 2 comprises a housing 5 and two separate raceways, and the inner ring 1 is of the solid type. Alternatively, it may be possible to foresee an arrangement with the elements inverted. In another embodiment, it could also be possible to have a rolling bearing in which the inner ring and the outer ring each comprise two separate raceways and a pre-stressing element enclosed in a housing as previously described. Alternatively, the pre-stressing element may be overmoulded onto said cup to obtain a unitary subassembly.

## Claims

1. Pre-stressed rolling bearing comprising an inner ring (1), an outer ring (2) and a row of rolling elements (3) disposed between the rings, at least one of said rings comprising a housing (5), an annular wire (6) mounted in the housing to form a first raceway for the rolling elements, and a pre-stressing element (8; 10) mounted in the housing, **characterized in that** said ring further comprises a stiffening cup (7; 9) axially disposed between the pre-stressing element (8; 10) and the rolling elements (3) and comprising a concave surface (7b; 9a) forming a second raceway for the rolling elements.

2. Rolling bearing according to claim 1, wherein the pre-stressing element (8; 10) is radially located between an outer axial portion (5a) of the housing and an inner edge (7d; 9b) of the stiffening cup.

3. Rolling bearing according to claim 1 or 2, wherein the stiffening cup (7) comprises a toroidal portion (7a) having an internal surface (7b) forming the second raceway and an external surface (7c) in contact with the pre-stressing element (8).

4. Rolling bearing according to claim 3, wherein the pre-stressing element (8) recovers entirely the external surface (7c).

5. Rolling bearing according to claim 3 or 4, wherein the stiffening cup (7) comprises an inner axial portion (7f) connected to the toroidal portion (7a) and extending towards a first lateral flange (5b) of the housing.

6. Rolling bearing according to claim 5, wherein the inner axial portion (7f) is disposed into the bore of the pre-stressing element (8).

7. Rolling bearing according to claim 5 or 6, wherein the inner axial portion (7f) leaves an axial gap between its free end and the lateral flange (5b).

8. Rolling bearing according to any of the preceding claims 3 to 7, wherein the stiffening cup (7) comprises an outer axial portion (7g) connected to the toroidal portion (7a) and extending towards a first lateral flange (5b) of the housing.

9. Rolling bearing according to claim 8, wherein the outer axial portion (7g) axially bears against the pre-stressing element (8).

10. Rolling bearing according to claim 1 or 2, wherein the stiffening cup (9) is massive and has in cross section a recess (9a) in the shape of an arc of a circle forming the second raceway.

11. Rolling bearing according to claim 10, wherein the pre-stressing element (10) recovers entirely external surfaces (9c, 9d) of the stiffening cup (9).

12. Rolling bearing according to any of the preceding claims, wherein the pre-stressing element (8; 10) is overmoulded onto the stiffening cup (7; 9).

13. Rolling bearing according to any of the preceding claims, wherein the housing (5) comprises a first lateral flange (5b) in axial contact with a first surface (8a) of the pre-stressing element, the stiffening cup (7; 9) being mounted in contact with an opposite second surface (8b) of said pre-stressing element.

14. Rolling bearing according to claim 13, wherein the housing comprises a second lateral flange (5c) in axial contact with the annular wire (6).

15. Rolling bearing according to claim 14, further comprising a cage (4) for the rolling elements radially disposed between a free end of the second lateral flange (5c) and the inner ring.

16. Steering column for an automotive vehicle comprising an outer tube, an inner shaft and at least one pre-stressed rolling bearing according to any of the preceding claims mounted radially between the tube and the shaft.
